# FASCICULE DE BREVET EUROPEEN

(11) **EP 4 078 710 B1**
(45) Date de publication et mention de la délivrance du brevet: **13.12.2023**
(21) Numéro de dépôt: 20845583.2
(22) Date de dépôt: 15.12.2020
(51) Int. Cl.: H01M 10/00, G01M 5/00, G01M 99/00, H01M 10/48

(54) **BANC DE CARACTERISATION MECANIQUE D'OBJETS MINCES A FIABILITE AUGMENTEE**
BANK ZUR MECHANISCHEN CHARAKTERISIERUNG VON DÜNNEN OBJEKTEN MIT ERHÖHTER ZUVERLÄSSIGKEIT
BENCH FOR MECHANICALLY CHARACTERIZING THIN OBJECTS WITH INCREASED RELIABILITY

(30) Priorité: 20.12.2019 FR 1915166
(43) Date de publication de la demande: 26.10.2022
(73) Titulaire: Commissariat à l'énergie atomique et aux énergies alternatives, 75015 Paris (FR)
(72) Inventeur: MATHIEU, Benoit, 38054 GRENOBLE Cedex 09 (FR); GILLIA, Olivier, 38054 GRENOBLE Cedex 09 (FR); LEYS, Côme-Emmanuel, 38054 GRENOBLE Cedex 09 (FR)
(74) Mandataire: Brevalex
(86) Numéro de dépôt international: PCT/FR2020/052453
(87) Numéro de publication internationale: WO 2021/123609

(56) Documents cités:
- WO-A1-2016/085271
- KR-A- 20080 074 240
- US-A1- 2014 178 720

## Description

### DOMAINE TECHNIQUE ET ÉTAT DE LA TECHNIQUE ANTÉRIEURE

La présente invention se rapporte à un banc de caractérisation mécanique d'objets minces, en particulier à un banc de caractérisation des propriétés mécaniques des cellules de batteries et plus particulièrement des électrodes négatives des batteries électriques, par exemple pour caractériser leur gonflement/dégonflement sous charge et décharge électrique.

Les électrodes négatives des batteries au Lithium-ion à base de graphite et silicium connaissent une variation d'épaisseur très importante, de l'ordre d'au moins 10% de l'épaisseur, lors de la charge (gonflement) et de la décharge (dégonflement). Le premier cycle de « formation » de la cellule voit un gonflement du même ordre de grandeur. Par exemple, dans le cas d'une électrode en silicium, l'épaisseur de l'électrode augmente de 20% lors de la formation, puis dégonfle de 10% lors de la première décharge et gagne environ 10% d'épaisseur à la charge suivante.

Des électrodes négatives contenant du silicium peuvent être utilisées dans les batteries au Lithium-Ion. Or le gonflement du silicium pose plusieurs types de problèmes dont :
- un vieillissement accéléré dû à une sorte de fatigue mécanique de l'électrode,
- un risque de défaillance prématurée, potentiellement par court-circuit interne pouvant résulter d'un écrasement et rupture du séparateur,
- des problèmes de conception de l'emballage de la cellule et du pack de batterie. En effet, une certaine souplesse de l'emballage est à prévoir et les variations de volume sont à prendre en compte dans la conception de l'emballage.

Il est donc souhaitable de pouvoir caractériser de manière précise le gonflement des électrodes, et plus généralement de la cellule et de la dépendance de ce gonflement au niveau de charge et aux efforts appliqués, afin de pouvoir optimiser les matériaux et la conception des cellules et des emballages de batterie.

Un banc de caractérisation est décrit dans le document « Effects of physical constraints on Li cyclability », D.P. Willkinson et AI, Journal of Power Sources, 36(1991) 517-527*.* Il comporte un bâti, deux montants supportant une presse, un capteur de pression, un capteur de déplacement et un logement pour la cellule dans lequel la presse lui applique un effort vertical. Le capteur de déplacement est aligné avec la direction de l'effort vertical. Lors de l'application de l'effort vertical sur la cellule, le bâti se déforme, ce qui peut gêner les mesures du capteur de déplacement et donc réduire la précision de mesure. WO2016/085271 divulgue un banc de caractérisation mécanique d'un objet fin par application d'une force de compression selon un axe de compression donné comportant :
- un ensemble de compression inférieur comportant une première face de compression,
- un équipage mobile le long de l'axe de compression portant un ensemble de compression supérieur comportant une deuxième face de compression en regard de la première face de compression,
- des moyens d'application d'une force selon l'axe de compression à l'objet destiné à être situé entre les première et deuxième faces de compression, ladite force étant d'intensité déterminée et orthogonale aux première et deuxième faces de compression,
- au moins un capteur de force interposé entre l'équipage mobile et les moyens d'application d'une force,
- au moins un capteur de déplacement disposé de sorte à mesurer le déplacement entre la première face de compression et la deuxième face de compression dans la direction de l'axe de compression (Z),
dans lequel l'ensemble de compression supérieur comporte une deuxième partie de compression portant la deuxième face de compression et un deuxième cadre entourant la deuxième partie de compression, la deuxième partie de compression et le deuxième cadre étant liés rigidement l'un à l'autre au moins dans la direction de l'axe de compression (Z), et présentant une liaison dans les directions (X, Y) orthogonales à la direction de déplacement et dans lequel le au moins un capteur de déplacement mesure le déplacement entre l'ensemble de compression supérieur et l'ensemble de compression inférieur.

### EXPOSÉ DE L'INVENTION

C'est par conséquent un but de la présente invention d'offrir un banc de caractérisation mécanique d'objets minces fiable et précis, par exemple permettant une mesure précise de la variation d'épaisseur sous contrainte d'objets minces, par exemple de cellules de batterie.

Le but énoncé ci-dessus est atteint par un banc de caractérisation mécanique d'objets minces comportant un bâti, un équipage mobile, des moyens d'application d'un effort par l'intermédiaire de l'équipage mobile, au moins un capteur de force, au moins un capteur de déplacement pour mesurer la variation d'épaisseur de l'objet mince. Le bâti et l'équipage mobile comportent chacun une face de compression entre lesquelles l'objet est comprimé, et le bâti et l'équipage mobile comportent chacun une zone de mesure, l'une portant le capteur de mesure et l'autre étant palpée par le capteur de mesure, chaque zone de mesure entourant une face de compression. Au moins la zone de mesure de l'équipage mobile est liée à la zone de compression de l'équipage mobile par une liaison rigide dans la direction du déplacement à mesurer et peu rigide dans les autres directions, afin que la déformation des zones de compression ne déforme pas ou peu les zones de mesure et que les risques de fausses mesures du capteur de déplacement soient limités.

Dans un exemple avantageux, la faible rigidité de la liaison entre la zone de compression et la zone de mesure dans la direction orthogonale au déplacement à mesurer est obtenue par des évidements en quinconce pratiqués dans la zone de mesure autour de la zone de compression.

De préférence, la ou les faces de compression sont en saillie par rapport à la zone de mesure, délimitant une zone d'application de pression de surface déterminée. La face compression présente avantageusement une surface inférieure ou égale à la zone de l'objet que l'on souhaite caractériser. Grâce à la mise en oeuvre de la ou des faces de compression en saillie, l'uniformité de la pression appliquée sur la cellule est deux fois meilleure, pour la même précision de positionnement de la cellule dans le banc de test, qu'en l'absence de la partie de compression en saillie.

Avantageusement la force de compression est transmise des moyens d'application de la force à la zone d'application de la force par au moins une liaison de type contact ponctuel, ce qui permet de réduire les efforts de rotulage, c'est-à-dire les moments de rotation appliqués à la plaque de compression qui se traduisent par une pression non uniforme et des efforts de cisaillement.

Dans un exemple de réalisation, les moyens d'application d'un effort vertical comportent un motoréducteur électrique, des poulies, au moins un câble et des leviers.

Dans un autre exemple de réalisation, les moyens d'application de l'effort vertical comportent un vérin hydraulique ou pneumatique.

Dans un autre exemple de réalisation, les moyens d'application de l'effort vertical comportent un vérin mécanique à vis.

La présente invention a alors pour objet un banc de caractérisation mécanique d'un objet fin par application d'une force de compression selon un axe de compression donné comportant :
- un bâti,
- un ensemble de compression inférieur reposant sur le bâti et comportant une première face de compression,
- un équipage mobile qui est mobile le long de l'axe de compression par rapport au bâti et portant un ensemble de compression supérieur comportant une deuxième face de compression en regard de la première face de compression,
- des montants fixés au bâti,
- des moyens d'application d'une force selon l'axe de compression à l'objet destiné à être situé entre les première et deuxième faces de compression, ladite force étant d'intensité déterminée et orthogonale aux première et deuxième faces de compression, les moyens d'application étant fixés auxdits montants,
- au moins un capteur de force interposé entre l'équipage mobile et les moyens d'application d'une force,
- au moins un capteur de déplacement disposé de sorte à mesurer le déplacement entre la première face de compression et la deuxième face de compression dans la direction de l'axe de compression.

En outre l'ensemble de compression supérieur comporte une deuxième partie de compression portant la deuxième face de compression et un deuxième cadre entourant la deuxième partie de compression, la deuxième partie de compression et le deuxième cadre étant liés rigidement l'un à l'autre au moins dans la direction de l'axe de compression, et présentant une liaison dans les directions orthogonales à la direction de déplacement, présentant une rigidité réduite de sorte qu'une déformation de la deuxième partie de compression dans le plan orthogonal à la direction de compression ne déforme pas ou peu le deuxième cadre. Le au moins un capteur de déplacement mesure le déplacement entre l'ensemble de compression supérieur et l'ensemble de compression inférieur.

De manière avantageuse, l'ensemble de compression inférieur comporte une première partie de compression portant la première face de compression et un premier cadre entourant la première partie de compression, la première partie de compression et le premier cadre étant liés rigidement l'un à l'autre au moins dans la direction de l'axe de compression, et présentant une liaison dans les directions orthogonales à la direction de déplacement qui présente une rigidité réduite, de sorte qu'une déformation de la première partie de compression dans le plan orthogonal à la direction de compression ne déforme pas ou peu le premier cadre.

Dans un exemple de réalisation avantageux, la deuxième partie de compression est reliée au deuxième cadre par au moins deux deuxièmes bras s'étendant de la deuxième partie de compression, une extrémité libre de chaque deuxième bras étant solidaire d'un bord du deuxième cadre, et une lumière dans le deuxième cadre traversant l'épaisseur du deuxième cadre sensiblement orthogonalement au bras est située en regard de chaque extrémité libre d'un bras.

La première partie de compression peut également être reliée au premier cadre par au moins deux premiers bras s'étendant de la première partie de compression, une extrémité libre de chaque premier bras étant solidaire d'un bord du premier cadre, et une lumière dans le premier cadre traversant l'épaisseur du premier cadre sensiblement orthogonalement au bras peut être située en regard de chaque extrémité libre d'un bras.

Avantageusement, au moins l'une des première et deuxième faces de compression comporte une zone de compression en saillie dont la surface est inférieure ou égale à une partie d'intérêt de l'objet à caractériser. La zone de compression a de préférence une surface égale à la surface de la partie d'intérêt de l'objet.

Par exemple, le au moins un capteur de déplacement est porté par le premier ou deuxième cadre et est en contact du deuxième ou premier cadre pour mesurer le déplacement entre le premier cadre et le deuxième cadre.

De manière avantageuse, le banc comporte trois capteurs de déplacement répartis autour de l'axe de compression et des moyens configurés pour comparer leurs mesures et détecter un défaut de planéité.

Selon une caractéristique additionnelle, la deuxième partie de compression comporte un pied en aval de la deuxième face de compression dans le sens d'application de la force de compression, ledit pied comportant deux alésages sécants situés dans un plan orthogonal à la direction d'application de la force.

Avantageusement, la force de compression est transmise des moyens d'application d'une force aux première et deuxième faces de compression par au moins une liaison de type contact ponctuel.

Le au moins un capteur de force est avantageusement relié aux moyens d'application de force par une liaison de type contact ponctuel.

Selon une caractéristique additionnelle, les moyens d'application d'une force (5) comportent des moyens pour modifier l'intensité de la force appliquée.

Dans un exemple avantageux, les moyens d'application d'une force comportent un motoréducteur pas à pas, au moins une première poulie en prise directe avec l'arbre de sortie du motoréducteur, une deuxième poulie, un câble entre les première et deuxième poulies, au moins un premier levier portant la deuxième poulie, un deuxième levier articulé sur le premier levier, et une tige de compression est prévue entre le deuxième levier et la deuxième face de compression.

Par exemple, le au moins un capteur de force est disposé entre le deuxième levier et la tige de compression
Selon une caractéristique additionnelle, la transmission de la force entre les moyens d'application de la force et la deuxième face de compression peut avoir lieu à travers deux liaisons de type contact ponctuel.

Avantageusement, la tige de compression est en contact ponctuel avec le deuxième levier et le au moins un capteur de force.

La présente invention a également pour objet une méthode de caractérisation d'un objet fin mettant en oeuvre un banc de caractérisation selon l'invention, comportant :
- la mise en place de l'objet sur la première face de compression de sorte à aligner la partie d'intérêt avec la zone de compression,
- l'application de la deuxième face de compression sur l'objet,
- la mesure du déplacement entre les deux faces de compression en fonction d'un effort de compression appliqué.

Un stimulus peut être appliqué de sorte à provoquer une modification du volume de l'objet au cours de la mesure.

Selon une application avantageuse, l'objet fin est une cellule électrochimique de batterie dont la partie d'intérêt est la partie comportant l'empilement formé par l'électrode positive, le séparateur, l'électrode négative et un emballage autour de l'empilement, la méthode comportant, lors des mesures, une étape d'application d'un cycle de charge et/ou de décharge électrique.

### BRÈVE DESCRIPTION DES DESSINS

La présente invention sera mieux comprise sur la base de la description qui va suivre et des dessins en annexe sur lesquels:
La figure 1 est une vue en perspective d'un exemple d'un banc de caractérisation mécanique d'un objet mince selon un premier point de vue,
La figure 2 est une vue en perspective du banc de la figure 1 selon un deuxième point de vue,
La figure 3 est une vue de dessus d'un exemple d'une zone de mesure d'un ensemble de compression inférieur du banc de la figure 1,
La figure 4 est une vue en perspective d'un exemple d'une partie de compression d'un ensemble de compression inférieur du banc de la figure 1,
La figure 5 est une vue en coupe selon le plan A-A longitudinale de la partie de compression de la figure 4,
La figure 6 est une vue en perspective d'un exemple d'une zone de mesure d'un ensemble de compression supérieur du banc de la figure 1,
La figure 7 est une vue en perspective d'un exemple d'une partie de compression d'un ensemble de compression supérieur du banc de la figure 1,
La figure 8 est une vue en coupe selon le plan B-B de la partie de compression de la figure 7,
La figure 9 est une représentation schématique d'une cellule que l'on souhaite caractériser avec le banc,
La figure 10 est une vue de l'ensemble de compression inférieur dont les éléments sont représentés sur les figures 3 et 4,
La figure 11 est une vue de détail schématique de la figure 10.

### EXPOSÉ DÉTAILLÉ DE MODES DE RÉALISATION PARTICULIERS

Le banc de caractérisation mécanique selon l'invention va être décrit plus particulièrement pour la mesure du gonflement sous contrainte de cellules pour batterie, plus particulièrement des électrodes négatives. Mais il sera compris que le banc de caractérisation sous contrainte s'applique à tout autre objet mince, et pour caractériser d'autres propriétés du l'objet par exemple le module d'Young.

On entend par « objet mince » un objet s'étendant principalement dans un plan et dont les dimensions les plus importantes sont dans ce plan. L'objet peut comporter un seul élément ou couche, ou un empilement de plusieurs éléments ou de plusieurs couches de nature identique, similaire ou différente. Un ou plusieurs de ces éléments peuvent réagir à un stimulus ou plusieurs stimuli et modifier le volume de l'objet dans une direction transversale au plan de l'empilement. Le banc permet de suivre cette variation de volume.

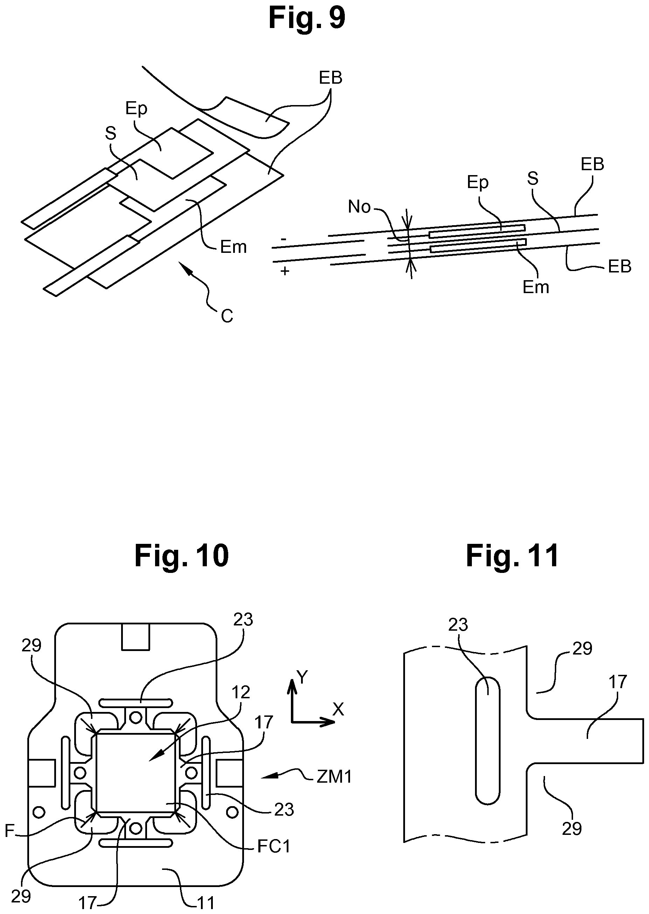

Sur la figure 9, on peut voir une représentation schématique d'une cellule qui est un objet mince adapté à une caractérisation par le banc selon l'invention. Elle comporte une électrode positive Ep, une électrode négative En, un séparateur S et l'emballage EB entourant les électrodes séparées par le séparateur.

On désignera par « épaisseur nominale » No l'épaisseur de l'empilement formé par l'électrode positive, l'électrode négative, le séparateur et l'emballage.

La section d'épaisseur nominale est la partie de la cellule présentant l'épaisseur nominale. Elle présente une surface égale à celle de l'élément de la cellule présentant la plus petite surface, généralement il s'agit de la surface de l'électrode positive de façon à garantir le bon fonctionnement électrochimique.

Dans le cas de cellules électrochimiques, on cherche à caractériser la section d'épaisseur nominale de manière fiable et précise.

Dans le cas d'une cellule de batterie, le stimulus est la charge et/ou décharge électrique.

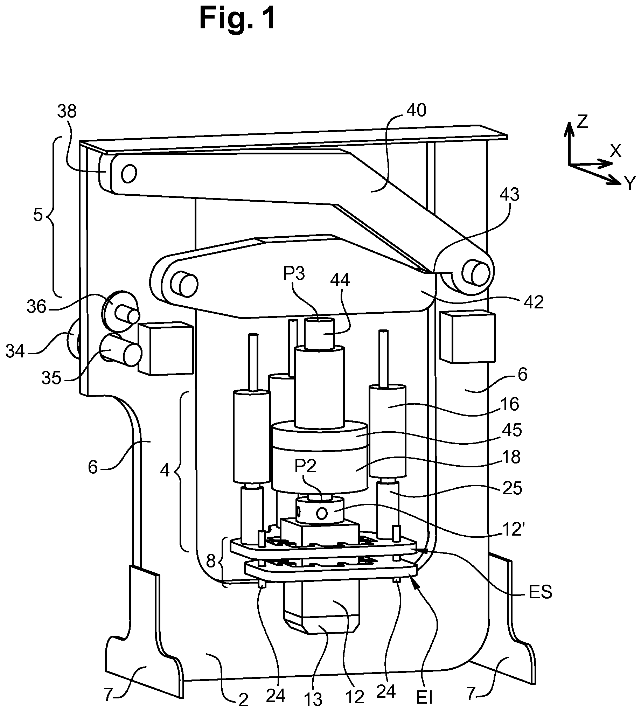

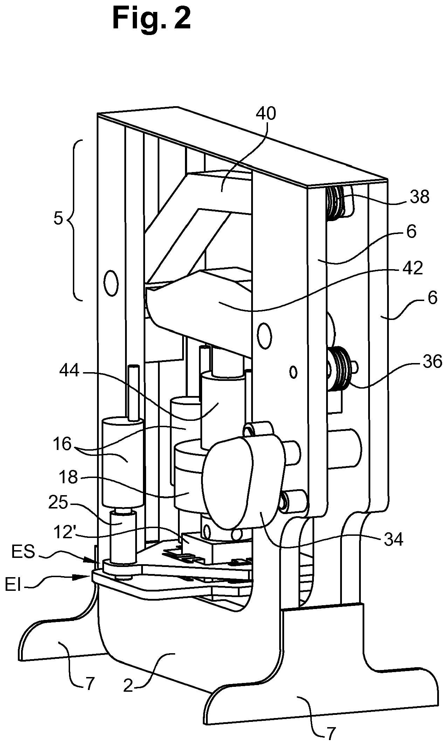

Sur les figures 1 et 2, on peut voir une représentation schématique d'un exemple de réalisation de banc de caractérisation selon l'invention.

Le banc de caractérisation comporte un bâti 2 formant une base pour le banc, un équipage mobile 4 monté mobile en translation dans la direction verticale Z, et des moyens 5 pour appliquer un effort selon la direction verticale Z. Les directions X et Y sont des directions orthogonales à l'axe Z. L'équipage mobile comporte également un capteur de force 18 pour mesurer l'effort appliqué par les moyens 5.

Les moyens 5 pour appliquer un effort selon la direction verticale Z sont montés sur deux montants solidaires du bâti 2. Les montants 6 permettent d'assurer une orientation acceptable de la force appliquée selon la direction souhaitée, i.e. la direction Z, et permettent de réduire les forces et moments parasites sur l'équipage mobile et donc sur la cellule à tester. Dans l'exemple représenté, le bâti et les montants sont réalisés par assemblage de deux flasques découpés dans une pièce plaque épaisse. Des pieds 7 sont prévus pour maintenir le bâti 2 et les montants 6 dans une position verticale.

Le banc comporte une zone d'application de contrainte 8 configurée pour recevoir l'objet mince, par exemple une cellule C de batterie, et lui appliquer une compression. A des fins de simplicité, l'objet mince sera désigné par « cellule ».

La zone d'application de contrainte comporte un ensemble de compression inférieur El et un ensemble de compression supérieure ES.

L'ensemble de compression inférieur El repose sur le châssis et est fixe le long de la direction verticale et dans le plan XY.

L'ensemble de compression inférieur El comporte une face de compression FC qui se situe au centre de l'ensemble et une zone de mesure ZM entourant la face de compression FC. Le ou les capteurs de déplacement décrits ci-dessous sont en contact avec la zone de mesure.

L'ensemble de compression supérieur ES est porté par l'équipage mobile de sorte à être au droit verticalement de l'ensemble de compression inférieur El et à pouvoir se rapprocher de l'ensemble de compression inférieur El.

L'ensemble de compression supérieur ES comporte une face de compression FC qui se situe au centre de l'ensemble et une zone de mesure ZM entourant la face de compression FC. Dans cet exemple, le ou les capteurs de déplacement décrits ci-dessous sont portés par la deuxième zone de mesure.

L'ensemble de compression inférieur El et l'ensemble de compression supérieure ES vont maintenant être décrits en détail.

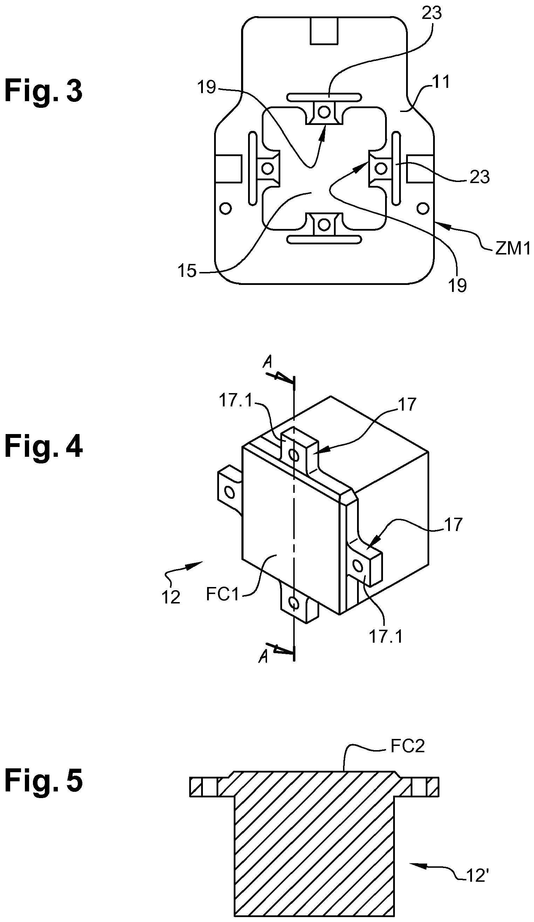

Sur les figures 3 à 5, on peut voir représentés les différents éléments de l'ensemble de compression inférieur El. Il comporte une première partie centrale, dite première partie de compression qui porte la première face de compression FC1 et présente une épaisseur importante. La première partie de compression 12 forme une enclume. De préférence, la première partie de compression est en matériau dur, par exemple en un matériau ayant un module d'Young supérieur à 160GPa, par exemple en un acier évitant l'écrasement par la pression.

La première zone de mesure ZM1 est formée par un premier cadre 11 entourant la première partie de compression 12.

Dans l'exemple représenté sur les figures 4 et 5 et de préférence, la première face de compression FC1 est en saillie de la face supérieure de la zone de mesure ZM1. La surface de la face de compression FC1 est inférieure ou égale à la surface de la section d'épaisseur nominale de la cellule. Ainsi, lors de la mesure, la section en compression comporte sur toute sa surface les deux électrodes. De préférence, la hauteur de la saillie est choisie afin de ne pas comprimer des pattes d'alimentation ou tout autre élément sortant latéralement des électrodes.

En utilisant une face de compression présentant la surface au plus égale à la surface de la section d'épaisseur nominale à +/- 2 mm, i.e. et en centrant cette face sur la section d'épaisseur nominale qui est d'épaisseur constante, la pression appliquée à la cellule est homogène et les mesures réalisées sont fiables. En effet, il peut être démontré par le calcul qu'un désalignement entre le centre de gravité de la surface d'application de pression et la section de l'objet présentant l'épaisseur nominale, provoque l'application d'une pression inhomogène au sein de la cellule.

Dans l'exemple représenté, une entretoise 13 est placée entre le bâti 2 et la première partie de compression 12 permettant de modifier la position de la face de compression FC1 le long de l'axe Z. De manière avantageuse, le contact entre le bâti 2 et l'entretoise 13 est un appui ponctuel ou quasi-ponctuel limitant la transmission de la déformation du bâti à la partie de compression.

Le premier cadre 11 comporte une fenêtre 15 logeant la partie de compression 12. Le premier cadre 11 présente de préférence une épaisseur plus faible que la partie de compression.

L'ensemble de compression inférieur comporte entre la première zone de mesure ZM1 et la première partie de compression 12 des moyens de liaison assurant une grande rigidité dans la direction de déplacement Z et une certaine flexibilité dans le plan XY afin d'absorber la dilatation de la partie de compression 12 dans le plan XY et limiter les risques de déformation de la zone de mesure.

Dans cet exemple la première partie de compression 12 a une forme généralement carrée et la fenêtre du premier cadre 11 a également une forme généralement carrée homothétique de la forme de la première partie de compression 12.

Les moyens de liaison assurent que la première partie de compression 12 et le premier cadre 11 aient la même position le long de la direction Z Avantageusement, la liaison entre le cadre 11 et la partie de compression 12 est localisée à une altitude Z aussi proche que possible de celle de la surface en contact avec la cellule. Dans cet exemple, la première partie de compression 12 comporte quatre bras 17 s'étendant chacun d'un bord extérieur de la première partie de compression 12 en direction d'un bord intérieur du premier cadre 11. En variante, deux ou trois bras peuvent être prévu entre la partie de compression et le cadre. En variante, les parties 11 et 12 peuvent être usinées d'un seul tenant et former une unique pièce.

Les bords intérieurs du premier cadre 11 portent chacun un logement 19 recevant l'extrémité libre 17.1 d'un bras 17. L'extrémité libre 17.1 de chaque bras 17 et chaque logement 19 comportent un trou traversant. Dans l'exemple de réalisation illustré, le cadre est fixé sur les bras au moyen de vis, les bras étant percés de trous taraudés, assurant la liaison rigide entre la partie de compression 12 et le premier cadre 11.

Par ailleurs, La partie extérieure de la zone de compression 12 est reliée au cadre 11 par une zone flexible capable d'absorber une expansion en X et en Y de la zone de compression sans la transmettre à la zone de mesure. Dans cet exemple, la liaison flexible entre la partie de compression 12 et le cadre est obtenue au moyen d'une lumière 23 formée dans le premier cadre 11. La lumière 23 est traversante et s'étend orthogonalement au bras 17. Chaque lumière 23 est située entre un logement 19 et le bord extérieur du premier cadre 11. Les lumières 23 sont de forme allongée et présentent avantageusement une longueur supérieure à la largeur d'un logement 19.

Sur la figure 10, on peut voir une vue de dessus de la partie de compression 12 montée dans le premier cadre 11.

La flexibilité dans le plan XY entre la partie de compression 12 et le cadre 11 permet de garantir la précision de mesure des déplacements. Lorsque la partie de compression 12 subit une contrainte compressive en Z et en raison du coefficient de Poisson du matériau de la partie de compression 12, celle-ci se dilate dans les directions X et Y. Par exemple, sous la contrainte en Z de 10Mpa, la dilatation en X de la partie de compression atteint 600 nm. Les zones déformables sur le cadre 11 absorbent la dilatation de la partie de compression, et évite que le cadre se déforme en « chips » de façon difficilement contrôlable. Une telle déformation induirait une erreur de mesure très importante, par exemple de plusieurs micromètres, sur la mesure des déplacements relatifs en Z des parties de compression.

Comme on peut le voir sur la figure 10, dans les zones en dehors de zones de liaison entre la partie de compression et le cadre, un espace 29 est ménagé entre le bord extérieur de la partie de compression 12 et le cadre 11 absorbant la dilatation de la partie de compression 12 dans ces zones et évitant un contact avec le cadre. Dans cet exemple, quatre espaces 29 sont formés, un espace étant situé entre chaque sommet de la partie de compression et un sommet du cadre. Les espaces sont formés par des fenêtres en forme de L.

Sur la figure 11, on peut voir un détail d'une liaison flexible au niveau d'une fenêtre 23. La fenêtre 23 et les espace 29 définissent des évidements traversants en quinconce pratiqués dans la zone de mesure autour de la zone de compression. Les espaces 29 définissent de part et d'autre du bras 17 deux évidements symétriques.

Dans cet exemple les espaces sont vides. En variante il peut être comblé en tout ou partie par un matériau suffisamment souple, tel qu'un élastomère, ne transmettant pas la dilatation de la partie de compression au cadre.

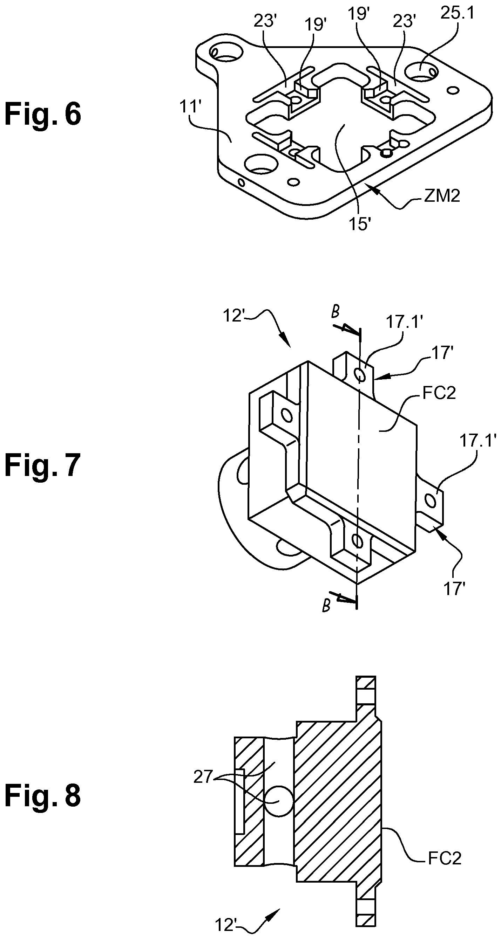

Sur les figures 6 à 8, on peut voir représentés les différents éléments de l'ensemble de compression supérieur ES. L'ensemble de compression supérieur ES présente un forme et une structure proche de celles de l'ensemble de pression inférieur El.

Il comporte une deuxième partie centrale 12', dite deuxième partie de compression, portant la deuxième face de compression FC2 et présentant une épaisseur importante. La deuxième partie de compression 12' forme une enclume. De préférence, la deuxième partie de compression 12' est également en matériau dur, par exemple en un matériau ayant un module d'Young supérieur à 160GPa, par exemple en un acier évitant l'écrasement par la pression.

L'ensemble de compression supérieur ES comporte également un deuxième cadre 11' entourant la deuxième partie de compression 12' et formant la deuxième zone de mesure. Le deuxième cadre 11' comporte une fenêtre 15' logeant la deuxième partie de compression 12'. Le deuxième cadre 11' présente de préférence une épaisseur plus faible que la deuxième partie de compression 12'.

L'ensemble de compression supérieur comporté également des moyens de liaison assurant une grande rigidité dans la direction de déplacement Z et une certaine flexibilité dans le plan XY afin d'absorber la dilatation de la partie de compression dans le plan XY et limiter les risques de déformation de la zone de mesure.

Dans cet exemple, la deuxième partie de compression 12' a la même forme que la première partie de compression 12 de l'ensemble de compression inférieur El. Elle présente donc une forme généralement carrée, et la fenêtre 15' du deuxième cadre 11' a également une forme généralement carrée homothétique de la forme de la deuxième partie de compression 12'.

La deuxième partie de compression 12' et le deuxième cadre 11' sont liés rigidement l'un de l'autre au moins le long de la direction Z de sorte à avoir la même position le long de la direction Z, et dans le plan XY. Dans cet exemple, la première partie de compression 12' comporte quatre bras 17' s'étendant chacun d'un bord extérieur de la deuxième partie de compression 12' en direction d'un bord intérieur du deuxième cadre 11'. En variante, deux ou trois bras peuvent être prévu entre la partie de compression et le cadre.

Les bords intérieurs du deuxième cadre 11' portent chacun un logement 19' recevant l'extrémité libre 17.1' d'un bras. L'extrémité libre 17.1' de chaque bras 17'et chaque logement 19' comportent un trou taraudés. Les bras sont solidarisés aux logements, assurant la liaison rigide entre la partie de compression 12' et le premier cadre 11' dans la direction Z.

Dans cet exemple la flexibilité dans le plan XY entre la deuxième partie de compression 12' et le deuxième cadre 11 est obtenue également au moyen de lumières 23' traversantes s'étendant orthogonalement aux bras et situées entre les logements 19' et les trous 25.1 dans le deuxième cadre 11' recevant les logements 25 des capteurs de déplacement. Les lumières 23' sont de forme allongée et présentent avantageusement une longueur supérieure à la largeur d'un logement 19'. En variante, les parties 11' et 12' peuvent être usinées d'un seul tenant et former une unique pièce.

Comme pour l'ensemble de compression supérieure, dans les zones en dehors de zones de liaison entre la partie de compression et le cadre, un espace est ménagé entre le bord extérieur de la partie de compression 12' et le cadre 11' absorbant la dilatation de la partie de compression 12 dans ces zones et évitant un contact avec le cadre.

Dans cet exemple l'espace est vide. En variante il peut être comblé en tout ou partie par un matériau suffisamment souple, tel qu'un élastomère, ne transmettant pas la dilatation de la partie de compression au cadre.

Il peut être prévu que l'espace soit vide pour l'un des ensembles de compression et comblé pour l'autre ensemble de compression.

Comme pour l'ensemble de compression inférieur chaque fenêtre 23' et les espaces entre la deuxième partie de compression 12' et le cadre forment des évidements traversants en quinconce.

Le deuxième cadre 11' comporte également des logements 25, trois dans l'exemple représenté, recevant les capteurs de déplacement. Les logements 25 sont formés par des tubes montés dans des trous 25.1 traversant s'étendant dans la direction Z et les capteurs de déplacement 16 sont montés dans les tubes de sorte à ce qu'ils soient en contact avec le premier cadre 11 et puissent mesurer le déplacement relatif des premier 11 et deuxième 11' cadres qui correspondant au déplacement relatif des première 12 et deuxième 12 parties de compression. Par exemple, lorsque l'on caractérise des cellules de batterie, on choisit de préférence des capteurs de déplacement ayant des spécifications de reproductibilité des mesures au maximum de 150 nm et une course de 2 mm.

De préférence, le ou les capteurs de déplacement 16 est ou sont un ou des capteurs électriques passifs de déplacements linéaires ou LVDT (Linear Variable Differential Transformer en terminologie anglo-saxonne). En variante, il peut s'agir d'un ou de capteurs capacitifs. Plusieurs capteurs de déplacement sont avantageusement mis en oeuvre, ce qui permet de détecter les défauts de planéité lors de la compression, i.e. par exemple une mise en biais de l'équipage mobile.

Il sera compris que la disposition des bras 17, 17' et leur fixation 11, 11' respectivement ne sont pas limitatifs et que d'autres configurations assurant une liaison rigide au moins dans la direction Z sont envisageables.

Les moyens de liaison entre le cadre 11, 11' et la partie de compression 12, 12' décrits ci-dessus assurent des mesures stables reproductibles.

En variante, les moyens assurant à la fois une grande rigidité selon Z et une flexibilité dans le plan XY peuvent être réalisés par trois ou quatre contacts ponctuels associés à un ressort plaquant le cadre 11, 11' sur la partie de compression 12, 12' respectivement. Néanmoins la manipulation des ensembles de compression peut être plus complexe.

Dans l'exemple représenté, la deuxième partie de compression inférieure 12' comporte une face de compression FC2 en saillie de la face supérieure du deuxième cadre, notamment de la zone de mesure ZM2 (figures 7 et 8).

Dans cet exemple, la surface de la deuxième face de compression FC2 est égale à celle de de la première face de compression FC1. De préférence, la hauteur de la saillie est choisie afin de ne pas comprimer des pattes d'alimentation ou tout autre élément sortant latéralement des électrodes.

En variante l'une ou l'autre des faces de compression FC1 et FC2 sont en saillie par rapport à leur cadre respectif et l'une ou l'autre des faces de compression présente une surface inférieure ou égale à la ou égale à la surface de la section d'épaisseur nominale de la cellule.

La deuxième partie de compression comporte un pied muni avantageusement de deux alésages 27 sécants et s'étendant dans le plan XY, qui permettent une répartition de l'effort exercé par les moyens d'application 5 sur la face de compression FC2 et d'obtenir une pression et une déformation encore plus uniforme sur la face de compression FC2.

Dans l'exemple représenté, les capteurs de déplacement font partie de l'ensemble de compression supérieure ES et se déplacent avec le deuxième cadre. En variante les capteurs de déplacement peuvent être fixés sur le premier cadre et palper la position du deuxième cadre.

En outre il sera compris qu'un ou deux capteurs de déplacement peut ou peuvent être mis en oeuvre.

Dans l'exemple représenté la partie du deuxième cadre ne recevant pas de capteur de déplacement est de faible largeur dans le plan XY ce qui donne à cette partie la souplesse nécessaire pour absorber la dilatation de la pièce 12.

Dans l'exemple représenté et de manière avantageuse, les premier et deuxième cadre comportent des moyens d'alignement l'un par rapport à l'autre dans la direction Z. les moyens d'alignement comportent des tiges de centrage 24 qui coopèrent avec des trous traversants 26 formés dans le premier cadre et dans le deuxième cadre. La mise en place des tiges dans les trous 26 assurent le bon alignement des ensembles de compression inférieur et supérieur.

Les première et deuxième faces de compression présentent une certaine planéité pour assurer l'application homogène des contraintes au sein de la cellule, par exemple les faces des enclumes sont rectifiées présentant avantageusement un écart de planéité inférieur à 1 µm.

Avantageusement, un rodage des faces de compression peut être réalisé, une fois les cadres fixés sur les parties de compression, afin de garantir une parfaite correspondance des faces de compression en vis-à-vis avec aucun jeu.

Il est possible de réduire le nombre de pièces, notamment en réunissant les fonctions des plaques de compression avec les pièces adjacentes. Néanmoins la mise en oeuvre de pièces séparées offre les avantages de pouvoir les remplacer en cas de défaut et de changer la géométrie en fonction des objets à tester.

Dans cet exemple, les moyens d'application de la force 5 sont portés par les montants 6. Ils comportent un motoréducteur électrique 34, un tambour d'enroulement 35 en prise directe avec l'arbre de sortie du motoréducteur 34, une ensemble de poulies 38 porté par une première extrémité d'un premier levier 40 qui est articulé par une deuxième extrémité à l'un des montants 6 autour d'un axe horizontal, un câble (non représenté) enroulé sur les deux ensembles de poulies 36, 38 formant un palan multiple qui amplifie la traction du câble par un facteur 6, un deuxième levier 42 articulé en rotation sur l'autre montant 6 autour d'un axe horizontal et relié au premier levier 40 par une came 43.

De préférence, les moyens d'application de la force 5 sont capables d'appliquer une force de 10 kN sur 10 cm², i.e. 10 MPa.

Le capteur de force 18 est disposé entre la deuxième partie de compression 12' et une tige de compression 44 qui est en appui contre le levier 42 et transmet la force jusqu'à la deuxième partie de compression. Dans l'exemple représenté, un support 45 du capteur de force est mis en oeuvre, il comporte une embase contre laquelle le capteur 18 et en appui et un tube fileté dont le passage débouche dans l'embase et permet de recevoir la tige filetée de compression 44. L'ensemble tige de compression 44 et support 45 est avantageusement réglable en longueur. En position rétractée, il peut être mis en place dans les logements prévus dans la pièce 12'. Une fois mise en place, la tige est dévissée afin de serrer l'ensemble de l'équipage mobile.

Dans l'exemple représenté et de manière très avantageuse, la force est transmise des moyens 5 à la zone d'application de la force par deux contacts ponctuels ou quasi-ponctuels. Dans cet exemple, la tige de compression 44 est en contact ponctuel par son extrémité haute avec le levier 42. Par exemple, l'extrémité haute de la tige de compression 44 a une forme conique qui est reçue par exemple dans un trou, par exemple de 1mm de rayon maintenant l'extrémité haute de la tige en position dans le plan XY. Avantageusement le trou est percé dans le fond plat d'un logement circulaire de diamètre supérieur à la tige de compression permettant de bloquer celle-ci en cas de glissement de la tige dans le plan XY. Dans un autre exemple de réalisation, la tête de la vis 44 est sphérique et se loge dans un palier sphérique usiné dans le levier 42. Le palier peut avantageusement être réalisé en matériau à faible friction, tel qu'un polymère ou du bronze auto-lubrifié par exemple).

Le capteur de force comporte par exemple une tête d'appui sphérique qui est par exemple mise en appui sur le fond plat d'un logement circulaire usiné en partie haute de la deuxième partie de compression 12' afin de réaliser un appui ponctuel. Dans un autre exemple de réalisation, la tige de compression ou le tube fileté est muni de jauges de contraintes calibrées formant un capteur d'effort et les deux extrémités de l'ensemble portent soit des têtes coniques, soit des têtes sphériques en appui sur un plan ou sur un logement sphérique.

La mise en oeuvre de deux liaisons ponctuelles ou quasi-ponctuelles permet de réduire, voire supprimer les efforts de rotulage.

L'activation du motoréducteur 34 fait monter ou descendre le premier levier qui, via la came, fait monter ou descendre le deuxième levier avec une amplitude plus faible, entre 10 et 20 fois par exemple, modifiant la force appliquée.

Dans l'exemple présenté, les moyens d'application de la force 5 peuvent permettre d'amplifier la force d'un facteur 100 entre la force de traction sur le câble et la force appliquée sur les enclumes. La souplesse du système dans son ensemble, en particulier l'élasticité du câble, des leviers 40 et 42, des tiges 44 et 45 et des montants 6, permet qu'un moteur muni d'un réducteur permettant 6000 pas/tour permet de réguler la force appliquée à moins de 1N près lorsque le banc est vide ou que la rigidité de l'objet testé est infinie.

Le motoréducteur peut être piloté en temps réel en fonction du temps et des paramètres mesurés, tels que l'état de charge de la cellule, les variations d'épaisseur mesurée par les capteurs de déplacement. On peut ainsi, par exemple maintenir la force de compression constante en toutes circonstances, par exemple quelle que soit la variation d'épaisseur de l'échantillon, ou faire varier la force de compression avec une loi dépendant de l'épaisseur de l'échantillon, ou encore faire varier la force avec le temps pour mesurer la caractéristique « déformation en fonction de la pression » de l'échantillon.

Les moyens 5 présentent l'avantage de stocker une énergie faible relativement au ressort, les risques d'éjection de l'équipage mobile sont donc réduits. Les tiges de centrage 24 peuvent être choisies fines puisqu'elles n'ont plus qu'un rôle de centrage.

De manière avantageuse, l'ensemble tige de compression 44 et support 45présente une longueur variable, pour cela il peut comporter deux parties liées l'une à l'autre par vissage, ce qui permet son retrait aisé et de libérer une grande hauteur entre les moyens 5 et l'équipage mobile, permettant de pouvoir accéder à l'ensemble de compression inférieur El et aux capteurs de déplacement.

En variante le capteur de force est disposé entre le levier 42 et la tige de compression. La liaison de type contact ponctuel est alors réalisée entre le capteur et le levier et entre le capteur et la tige de compression. Le système permet d'assurer un appui quasiment ponctuel de la tige de compression sur le levier afin d'annuler les efforts de rotulage.

De préférence des ressorts sont prévus pour maintenir les leviers en position haute permettant de retirer facilement la tige de compression et donc la plaque de compression inférieure sans que les leviers ne tombent.

Le capteur de force 18 est aligné avec l'axe Z le long duquel l'effort est appliqué. Le capteur d'effort 18 mesure l'effort appliqué sur la cellule. Il est à noter que le poids de l'équipage mobile (plaque support, plaque de compression supérieure, capteur(s) de déplacement et éventuellement plaque d'homogénéisation qui sera décrite ci-dessous) est à ajouter à la force mesurée par le capteur 18 pour calculer la force appliquée sur l'échantillon.

A titre d'exemple, le capteur de force 18 peut être un capteur utilisant une pièce déformable élastiquement et comportant des jauges de déformation, de préférence des capteurs à quatre jauges organisées en « pont complet » et calibrées en température afin de garantir une mesure précise et sans dérive dans le temps, qui ne nécessite donc pas de calibration périodique. A titre d'exemple uniquement on peut utiliser un capteur de force D-Mesure^{®}, modèle K450H-10kN.

La deuxième partie de compression 12' présente une épaisseur et une largeur importantes, par exemple 30 mm par 30 mm, ce qui assure la planéité de la surface de compression en homogénéisant les contraintes.

Avantageusement, une plaque d'homogénéisation peut être interposée entre l'ensemble de compression supérieur ES et le capteur de force. Elle est réalisée de préférence en matériau dur, de préférence ayant un module d'Young supérieur à 160 GPa, par exemple en acier et a une épaisseur d'au moins 20 mm. La mise en oeuvre d'une telle plaque d'homogénéisation permet de réduire l'épaisseur de la deuxième partie de compression tout en conservant une bonne homogénéité de la déformation et de la pression. La plaque d'homogénéisation comporte très avantageusement sur sa face en contact avec la deuxième partie de compression, un anneau en saillie de la surface formant un appui annulaire contre la deuxième partie de compression.

Le banc est tel que les points P1, P2 et P3 représentés sur la figure 1 sont alignés sur l'axe Z, le long duquel la force de compression est appliquée.

P1 (non visible) est le centre de gravité de la face de compression FC2 du l'ensemble de compression supérieur ES, P2 est le point de liaison de type contact ponctuel entre le capteur de force 18 et la face arrière de la deuxième partie de compression 12' et P3 est l'extrémité longitudinale supérieure de la tige de compression opposée à celle du côté du capteur de force 18. L'axe Z le long duquel on souhaite appliquer la force de compression à la cellule passe par les points P1 et P2.

Par ailleurs, comme cela sera décrit ci-dessous, la mise en place de la cellule entre les parties de compression 12, 12' est telle qu'elle assure que la section d'épaisseur nominale est centrée sur le point P1.

Avantageusement en choisissant une ou des faces de compression FC1, F2 ayant la surface de la section d'épaisseur nominale le centrage de la cellule est simplifié et toute la section d'épaisseur nominale est caractérisée.

Dans le cas d'une caractérisation d'un objet d'épaisseur non homogène, tel que par exemple une cellule de batterie qui comporte une électrode négative et une électrode positive, l'électrode positive étant de surface plus petite que celle de l'électrode négative, la zone d'application de la pression est au plus égale à la section de l'objet à caractériser ayant une épaisseur sensiblement constante, i.e. dans le cas d'une cellule il s'agit de la section de surface égale à celle de l'électrode positive.

Le banc de caractérisation est particulièrement adapté à la mesure du gonflement/dégonflement des cellules sous charge. Le banc comporte avantageusement des moyens pour relier électriquement la cellule à une générateur/ à une charge en fonction de la mesure faite.

Il peut également avantageusement être prévu de disposer le banc dans un environnement stable thermiquement pour atteindre une bonne reproductibilité des mesures. Le banc de caractérisation peut être disposé dans une enceinte régulée en température, dans laquelle le banc serait protégé des flux d'air et des sources de rayonnement thermique. Il est alors possible d'atteindre une reproductibilité des mesures de déplacements meilleure que +/-50 nm avec le banc selon l'invention.

Selon un autre exemple, les moyens d'application d'un effort comportent un ressort hélicoïdal maintenu en compression, le ressort étant coaxial à l'axe Z. De préférence, les moyens d'application de la force permettent de modifier l'intensité de la force appliquée. Dans l'exemple représenté, le ressort 7 est en appui par ses extrémités longitudinales entre deux traverses perpendiculaires à la direction Z et fixés aux montants et dont la distance relative dans la direction verticale est réglable, permettant de modifier la compression du ressort et donc de l'effort appliqué à la cellule.

Les traverses peuvent comporter chacune un siège logeant respectivement l'extrémité longitudinale supérieure et l'extrémité longitudinale inférieure du ressort et fixant l'alignement de son axe avec l'axe Z le long duquel la force est à appliquer.

De manière avantageuse, des moyens peuvent être prévus pour régler l'alignement de l'axe du ressort avec l'axe Z. Par exemple le siège1 de la traverse supérieure peut présenter plusieurs positions dans une direction perpendiculaire à l'axe Z pour régler l'alignement du ressort à l'axe Z.

Selon un autre exemple de réalisation, les moyens d'application de l'effort vertical comportent un vérin hydraulique ou pneumatique.

Selon un autre exemple de réalisation, les moyens d'application de l'effort vertical comportent un vérin mécanique à vis.

Dans l'exemple représenté, à la fois l'ensemble de compression supérieur et l'ensemble de compression inférieur comportent des moyens de liaison assurant une flexibilité dans le plan XY entre la partie de compression et le cadre.

Dans un autre exemple, seul l'ensemble de compression supérieur comporte de tels moyens et un ensemble de compression inférieur comportant une enclume massive ne présentant peu ou pas de dilatation au niveau de contraintes considérées.

La mise en oeuvre de l'ensemble de compression supérieur ES tel que décrit en relation avec les figures 6 à 8 présente l'avantage d'offrir un équipage mobile très léger.

Un exemple de fonctionnement du banc de caractérisation des figures 1 et 2 pour caractériser une cellule va maintenant être décrit.

La cellule est positionnée par exemple sur la première partie de compression 12 de l'ensemble de compression inférieur El, de sorte à aligner la section d'épaisseur nominale avec la première face de compression FC1.

Par exemple, les coins de l'électrode de plus petite surface sont repérés, par exemple, en marquant au feutre les coins de l'électrode négative de la cellule par des flèches F pointant vers chaque coin, partant de l'extérieur.

Comme on peut le voir sur la figure 10, l'ensemble de compression inférieur El comporte quatre fenêtres 29 en forme de L, les deux branches de chaque L formant un angle intérieur orienté vers la partie de compression 12.

L'ensemble de compression inférieur est disposé au-dessus de la cellule, la zone de compression en regard de la face de la cellule portant les flèches, et est positionnée de sorte à aligner l'extrémité de chaque flèche F avec un angle intérieur d'une fenêtre en L 29. Un adhésif est avantageusement utilisé sur la partie de compression 12 pour fixer la cellule sur celle-ci.

Si les espaces entre la partie de compression et le cadre sont en partie comblés par un matériau souple, des zones sans matériau souple sont ménagés pour pouvoir visualiser les flèches, lorsque la méthode d'alignement ci-dessus est mise en oeuvre.

En variante, la cellule peut être positionnée précisément et fixée sur la partie de compression de l'ensemble de compression supérieur et ensuite être positionné sur l'équipage mobile en regard de l'ensemble de compression supérieur.

La mise en place et la fixation en position de la cellule sur l'ensemble compression avec de l'adhésif est facilitée si la plaque sur laquelle la cellule est fixée est celle qui ne porte pas les capteurs.

L'équipage mobile est bloqué dans une position haute pour permettre la mise en place de l'ensemble de compression inférieur El.

L'ensemble de compression inférieur El est ensuite positionnée sur le bâti.

La position relative de l'ensemble de compression inférieur El et de l'ensemble de compression supérieur ES est ensuite réglée au moyen des tiges 24. Le point P2 et le point P1 sont alignés.

L'équipage mobile est libéré de sa position haute et la deuxième partie de compression 12' de l'ensemble de compression supérieur ES vient comprimer la cellule.

Les tiges 24 sont retirées après qu'une force minimale soit appliquée pour maintenir en place les pièces mobiles.

La force appliquée est mesurée par le capteur de force 18 en tenant compte du poids de l'équipage mobile.

Un cycle de charge ou décharge est appliqué à la cellule. Les mesures peuvent commencer. Les capteurs de déplacement mesurent le déplacement entre l'ensemble de compression inférieur El et l'ensemble de compression supérieur ES, plus particulièrement entre le premier cadre 11 et le deuxième cadre 11' qui est l'image du gonflement ou dégonflement de la cellule sous une contrainte donnée.

Lors de la phase de compression, les parties de compression 12 et 12' se dilatent dans la direction X et Y sous l'effet de la pression et du coefficient de Poisson du matériau qui constitue les parties de compression 12 et 12'. Du fait de la souplesse dans la direction X et Y du contact entre les cadres 11 et les parties de compression 12, la déformation des parties de compression n'ont pas ou peu d'effet sur les zones de mesure, même au niveau des liaisons par les bras 17, 17', la déformation qu'ils pourraient appliquer aux cadres 11, 11' est absorbé par les lumières 23, 23'. Ainsi une déformation parasite des zones de mesure qui résulterait de la contrainte de compression au centre des ensembles de compression dû au coefficient de Poisson est évitée. Les zones supportant les capteurs et les zones où le déplacement est mesuré ne subissent pas de déplacement parasite dans la direction Z. La précision de la mesure du déplacement est alors augmentée.

On peut envisager de modifier la contrainte appliquée au cours de la mesure, par exemple pour simuler un boîtier de batterie plus ou moins rigide. Ainsi il est possible de connaître le comportement de la cellule en reproduisant au plus près les conditions de fonctionnement de celle-ci.

Le banc de caractérisation est particulièrement adapté à l'étude des cellules de batterie, notamment des électrodes négatives des cellules Lithium-ion comprenant du silicium.

Il permet de réaliser une cartographie complète du comportement de l'électrode en fonction de l'état de charge et de la pression appliquée.

Le banc permet d'appliquer une pression uniforme sur une surface d'un unique couple d'électrodes sur une surface d'un échantillon d'électrodes de batterie, par exemple une surface de de 10cm². Ainsi on obtient un état électrochimique et mécanique uniforme dans toute la cellule, ce qui permet d'acquérir des données très précises utilisables pour la modélisation du matériau d'électrode à l'échelle électrode.

Le banc permet d'appliquer des pressions allant jusqu'à 10MPa permettant d'étudier toute la gamme des pressions rencontrées dans les cellules jusqu'à des contraintes dommageables pour la cellule, ce qui permet également d'acquérir des données utiles pour les études de sûreté sur le comportement des cellules soumises à des contraintes accidentelles.

Le banc peut permettre d'atteindre une précision de +/-50nm dans la direction de l'épaisseur de l'électrode qui est la direction d'application de la force, et de mesurer à 1% près les variations d'épaisseur des électrodes courantes, les variations d'épaisseur typiques étant de 5 à 10µm, pour les matériaux graphite-silicium dans les épaisseurs courantes.

Le banc de caractérisation motorisé de la figure 1 permet de simuler le comportement de l'électrode dans un emballage de cellule ou de pack ayant des caractéristiques mécaniques arbitraires. Dans ce cas la force appliquée est asservie à l'épaisseur mesurée via une fonction préprogrammée.

Dans les exemples décrits les faces de compression sont configurées pour appliquer un effort de compression à la section d'épaisseur nominale de la cellule, i.e. sa section de plus grande épaisseur, puisque c'est la partie de la cellule que l'on souhaite caractériser. Il sera compris que la partie à caractériser d'un objet n'est pas nécessairement celle de plus grande épaisseur, il pourrait s'agir de plus faible épaisseur. La surface de la ou des faces de compression est choisie inférieure ou égale à la partie de l'objet que l'on souhaite caractériser.

Ce banc peut par exemple être utilisé pour caractériser l'écrasement sous effort de matériaux poreux en couches minces, par exemple mis en oeuvre dans les cellules de piles à combustibles à membrane à échange de proton ou PEMFC (Proton Exchange Membrane Fuel Cell en terminologie anglo-saxonne).

Le banc permet de mesurer les caractéristiques mécaniques des différents éléments de la cellule, notamment le module de Young. Pour cela, on applique différents niveaux de force sur les éléments à tester, par exemple sur la cellule complète ou sur les éléments séparés de la cellule, et on mesure le déplacement engendré sous l'effet de cette force. La courbe déplacement/pression constitue une loi de comportement de l'objet mesuré. Pour certains éléments, la mesure est dynamique : par exemple pour le séparateur de la cellule, imprégné d'électrolyte, le déplacement n'est pas instantané. Il se stabilise après plusieurs dizaines de minutes à plusieurs heures après un changement de force appliquée.

La forme des parties de compression est adaptée à l'objet que l'on souhaite caractériser. Dans l'exemple décrit ci-dessus on souhaitait caractériser une cellule de batterie de forme carrée. Les parties de compression sont choisies de forme carrée. Si l'objet a caractérisé est de forme polygonale autre que carrée ou en forme de disque, les partie de compression sont choisies de forme polygonale autre que carrée ou circulaire respectivement.

## Revendications

1. Banc de caractérisation mécanique d'un objet fin par application d'une force de compression selon un axe de compression donné (Z) comportant :
- un bâti (2),
- un ensemble de compression inférieur (El) reposant sur le bâti (2) et comportant une première face de compression (FC1),
- un équipage mobile (4) mobile le long de l'axe de compression (Z) par rapport au bâti (2) et portant un ensemble de compression supérieur (ES) comportant une deuxième face de compression (FC2) en regard de la première face de compression (FC1),
- des montants (6) fixés au bâti (2),
- des moyens d'application (5) d'une force selon l'axe de compression (Z) à l'objet destiné à être situé entre les première et deuxième faces de compression, ladite force étant d'intensité déterminée et orthogonale aux première et deuxième faces de compression, les moyens d'application (5) étant fixés auxdits montants (6),
- au moins un capteur de force (18) interposé entre l'équipage mobile (4) et les moyens d'application d'une force (5),
- au moins un capteur de déplacement (16) disposé de sorte à mesurer le déplacement entre la première face de compression (FC1) et la deuxième face de compression (FC2) dans la direction de l'axe de compression (Z),
dans lequel l'ensemble de compression supérieur (ES) comporte une deuxième partie de compression (12') portant la deuxième face de compression (FC2) et un deuxième cadre (11') entourant la deuxième partie de compression (12'), la deuxième partie de compression (12') et le deuxième cadre (11') étant liés rigidement l'un à l'autre au moins dans la direction de l'axe de compression (Z), et présentant une liaison dans les directions (X, Y) orthogonales à la direction de déplacement, présentant une rigidité réduite de sorte qu'une déformation de la deuxième partie de compression (12') dans le plan orthogonal à la direction de compression (Z) ne déforme pas ou peu le deuxième cadre (11') et dans lequel le au moins un capteur de déplacement (16) mesure le déplacement entre l'ensemble de compression supérieur (ES) et l'ensemble de compression inférieur (El).

2. Banc de caractérisation selon la revendication 1, dans lequel l'ensemble de compression inférieur (El) comporte une première partie de compression (12) portant la première face de compression (FC1) et un premier cadre (11) entourant la première partie de compression (12), la première partie de compression (12) et le premier cadre (11) étant liés rigidement l'un à l'autre au moins dans la direction de l'axe de compression (Z), et présentant une liaison dans les directions (X, Y) orthogonales à la direction de déplacement qui présente une rigidité réduite, de sorte qu'une déformation de la première partie de compression (12) dans le plan orthogonal à la direction de compression (Z) ne déforme pas ou peu le premier cadre (11).

3. Banc de caractérisation selon la revendication 2, dans lequel la première partie de compression (12) est reliée au premier cadre (11) par au moins deux premiers bras (17) s'étendant de la première partie de compression (12), une extrémité libre (17.1) de chaque premier bras (17) étant solidaire d'un bord du premier cadre (11), et dans lequel une lumière (23) dans le premier cadre (11) traversant l'épaisseur du premier cadre (11) sensiblement orthogonalement au bras est située en regard de chaque extrémité libre (17.1) d'un bras (17).

4. Banc de caractérisation selon l'une des revendication 1 à 3, dans lequel la deuxième partie de compression (12') est reliée au deuxième cadre (11') par au moins deux deuxièmes bras (17') s'étendant de la deuxième partie de compression (12'), une extrémité libre (17.1') de chaque deuxième bras (17') étant solidaire d'un bord du deuxième cadre (11') et dans lequel une lumière (23') dans le deuxième cadre (11') traversant l'épaisseur du deuxième cadre (11') sensiblement orthogonalement au bras est située en regard de chaque extrémité libre (17.1') d'un bras (17).

5. Banc de caractérisation selon l'une des revendications 1 à 4, dans lequel au moins l'une des première (FC1) et deuxième (FC2) face de compression comporte une zone de compression en saillie dont la surface est inférieure ou égale à une partie d'intérêt de l'objet à caractériser, dans lequel optionnellement la zone de compression a une surface égale à la surface de la partie d'intérêt de l'objet.

6. Banc de caractérisation selon les revendications 3 et 4, dans lequel le au moins un capteur de déplacement (16) est porté par le premier (11) ou deuxième (11') cadre et est en contact du deuxième (11') ou premier (11) cadre pour mesurer le déplacement entre le premier cadre (11) et le deuxième cadre (11').

7. Banc de caractérisation selon l'une des revendications 1 à 6, comportant trois capteurs de déplacement (16) répartis autour de l'axe de compression (Z) et des moyens configurés pour comparer leurs mesures et détecter un défaut de planéité.

8. Banc de caractérisation selon l'une des revendications 1 à 7, dans lequel la deuxième partie de compression comporte un pied en aval de la deuxième face de compression (FC2) dans le sens d'application de la force de compression, ledit pied comportant deux alésages sécants situés dans un plan orthogonal à la direction (Z) d'application de la force.

9. Banc de caractérisation selon l'une des revendications 1 à 8, dans lequel la force de compression est transmise des moyens d'application d'une force (5) aux première (FC1) et deuxième (FC2) face de compression par au moins une liaison de type contact ponctuel, dans lequel optionnellement le au moins un capteur de force (18) est relié aux moyens d'application de force par une liaison de type contact ponctuel.

10. Banc de caractérisation selon l'une des revendications 1 à 9, dans lequel les moyens d'application d'une force (5) comportent des moyens pour modifier l'intensité de la force appliquée.

11. Banc de caractérisation selon l'une des revendications 1 à 10, dans lequel les moyens d'application d'une force comportent un motoréducteur pas à pas, au moins une première poulie en prise directe avec l'arbre de sortie du motoréducteur, une deuxième poulie, un câble entre les première et deuxième poulies, au moins un premier levier portant la deuxième poulie, un deuxième levier articulé sur le premier levier, et dans lequel une tige de compression est prévue entre le deuxième levier et la deuxième face de compression, dans lequel optionnellement le au moins un capteur de force est disposé entre le deuxième levier et la tige de compression.

12. Banc de caractérisation selon la revendication 11, dans lequel la transmission de la force entre les moyens d'application de la force et la deuxième face de compression a lieu à travers deux liaisons de type contact ponctuel, dans lequel optionnellement la tige de compression est en contact ponctuel avec le deuxième levier et le au moins un capteur de force.

13. Méthode de caractérisation d'un objet fin mettant en oeuvre un banc de caractérisation selon l'une des revendications précédentes, comportant :
- la mise en place de l'objet sur la première face de compression de sorte à aligner la partie d'intérêt avec la zone de compression,
- l'application de la deuxième face de compression sur l'objet,
- la mesure du déplacement entre les deux faces de compression en fonction d'un effort de compression appliqué.

14. Méthode de caractérisation selon la revendication 13, dans laquelle un stimulus est appliqué de sorte à provoquer une modification du volume de l'objet au cours de la mesure.

15. Méthode de caractérisation selon la revendication 13 ou 14, dans laquelle l'objet fin est une cellule électrochimique de batterie dont la partie d'intérêt est la partie comportant l'empilement formé par l'électrode positive, le séparateur, l'électrode négative et un emballage autour de l'empilement, la méthode comportant, lors des mesures, une étape d'application d'un cycle de charge et/ou de décharge électrique.

## Patentansprüche

1. Bank zur mechanischen Charakterisierung eines dünnen Objekts durch Anwendung einer Druckkraft entlang einer gegebenen Druckachse (Z), beinhaltend:
- ein Gestell (2),
- eine untere Druckbaugruppe (EI), die auf dem Gestell (2) ruht, und eine erste Druckfläche (FC1) beinhaltet,
- ein bewegliches Organ (4), das entlang der Druckachse (Z) relativ zum Gestell (2) beweglich ist, und eine obere Druckbaugruppe (ES) trägt, die eine zweite Druckfläche (FC2) gegenüber der ersten Druckfläche (FC1) beinhaltet,
- Pfosten (6), die am Gestell (2) befestigt sind,
- Mittel zur Anwendung (5) einer Kraft entlang der Achse des Drucks (Z) auf das Objekt, die ausgewählt sind, um zwischen der ersten und zweiten Druckfläche angeordnet zu sein, wobei die Kraft von bestimmter Intensität und orthogonal zur ersten und zweiten Druckfläche ist, wobei die Mittel zur Anwendung (5) am Pfosten (6) befestigt sind,
- mindestens einen Kraftsensor (18), der zwischen dem beweglichen Organ (4) und den Mitteln zur Anwendung einer Kraft (5) eingesetzt ist,
- mindestens einen Verschiebungssensor (16), der arrangiert ist, um die Verschiebung zwischen der ersten Druckfläche (FC1) und der zweiten Druckfläche (FC2) in der Richtung der Druckachse (Z) zu messen,
wobei die obere Druckbaugruppe (ES) einen zweiten Druckbereich (12') beinhaltet, der die zweite Druckfläche (FC2) trägt, und einen zweiten Rahmen (11'), der den zweiten Druckbereich (12') umgibt, wobei der zweite Druckbereich (12') und der zweite Rahmen (11') mindestens in Richtung der Druckachse (Z) starr miteinander verbunden sind und eine Verbindung in den Richtungen (X, Y) aufweisen, die orthogonal zur Verschiebungsrichtung sind, und eine reduzierte Steifigkeit aufweisen, so dass eine Verformung des zweiten Druckbereichs (12') in der Ebene, die orthogonal zur Druckrichtung (Z) ist, den zweiten Rahmen (11') nicht oder nur geringfügig verformt, und wobei der mindestens eine Verschiebungssensor (16) die Verschiebung zwischen der oberen Druckbaugruppe (ES) und der unteren Druckbaugruppe (EI) misst.

2. Bank zur Charakterisierung nach Anspruch 1, wobei die untere Druckbaugruppe (EI) einen ersten Druckbereich (12) beinhaltet, der die erste Druckfläche (FC1) trägt und einen ersten Rahmen (11), der den ersten Druckbereich (12) umgibt, wobei der erste Druckbereich (12) und der erste Rahmen (11) mindestens in Richtung der Druckachse (Z) starr miteinander verbunden sind, und eine Verbindung in den Richtungen (X, Y) aufweisen, die orthogonal zur Verschiebungsrichtung sind, und eine reduzierte Steifigkeit aufweisen, so dass eine Verformung des ersten Druckbereichs (12) in der Ebene, die orthogonal zur Druckrichtung (Z) ist, den ersten Rahmen (11) nicht oder nur geringfügig verformt.

3. Bank zur Charakterisierung nach Anspruch 2, wobei der erste Druckbereich (12) an den ersten Rahmen (11) durch mindestens zwei erste Arme (17) angeschlossen ist, die sich vom ersten Druckbereich (12) erstrecken, wobei ein freies Ende (17.1) jedes ersten Arms (17) fest mit einer Kante des ersten Rahmens (11) verbunden ist, und wobei eine Lichtquelle (23) im ersten Rahmen (11), die die Dicke des ersten Rahmens (11) im Wesentlichen orthogonal zum Arm durchquert, gegenüber jedem freien Ende (17.1) eines Arms (17) angeordnet ist.

4. Bank zur Charakterisierung nach einem der Ansprüche 1 bis 3, wobei der zweite Druckbereich (12') an den zweiten Rahmen (11') durch mindestens zwei zweite Arme (17') angeschlossen ist, die sich vom zweiten Druckbereich (12') erstrecken, wobei ein freies Ende (17.1') jedes zweiten Arms (17') fest mit einer Kante des zweiten Rahmens (11') verbunden ist, und wobei eine Lichtquelle (23') im zweiten Rahmen (11'), die die Dicke des zweiten Rahmens (11') im Wesentlichen orthogonal zum Arm durchquert, gegenüber jedem freien Ende (17.1') eines Arms (17) angeordnet ist.

5. Bank zur Charakterisierung nach einem der Ansprüche 1 bis 4, wobei mindestens die eine der ersten (FC1) und zweiten (FC2) Druckflächen eine hervorstehende Druckzone beinhalten, dessen Oberfläche kleiner oder gleich eines Bereichs von Interesse des zu charakterisierenden Objekts ist, wobei optional die Druckzone eine Oberfläche hat, die der Oberfläche des Bereichs von Interesse des Objekts entspricht.

6. Bank zur Charakterisierung nach Anspruch 3 und 4, wobei der mindestens eine Verschiebungssensor (16) vom ersten (11) oder zweiten (11') Rahmen getragen wird und mit dem zweiten (11') oder ersten (11) Rahmen in Kontakt steht, um die Verschiebung zwischen dem ersten Rahmen (11) und dem zweiten Rahmen (11') zu messen.

7. Bank zur Charakterisierung nach einem der Ansprüche 1 bis 6, drei Verschiebungssensoren (16) beinhaltend, die um die Druckachse (Z) verteilt sind, und Mittel, die konfiguriert sind, um ihre Messungen zu vergleichen und einen Fehler in der Ebenheit zu erkennen.

8. Bank zur Charakterisierung nach einem der Ansprüche 1 bis 7, wobei der zweite Druckbereich einen Fuß nach der zweiten Druckfläche (FC2) in der Richtung der Anwendung der Druckkraft beinhaltet, wobei der Fuß zwei sich schneidende Bohrungen beinhaltet, die in einer Ebene orthogonal zur Richtung (Z) der Anwendung der Kraft angeordnet sind.

9. Bank zur Charakterisierung nach einem der Ansprüche 1 bis 8, wobei die Druckkraft von den Mitteln zur Anwendung einer Kraft (5) an die erste (FC1) und zweite (FC2) Druckfläche durch mindestens eine Verbindung des Punktkontakttyps übertragen wird, wobei optional der mindestens eine Kraftsensor (18) über eine Verbindung des Punktkontakttyps an die Mittel zur Anwendung einer Kraft angeschlossen ist.

10. Bank zur Charakterisierung nach einem der Ansprüche 1 bis 9, wobei die Mittel zur Anwendung einer Kraft (5) Mittel zum Verändern der Intensität der angewendeten Kraft beinhalten.

11. Bank zur Charakterisierung nach einem der Ansprüche 1 bis 10, wobei die Mittel zur Anwendung einer Kraft einen Getriebeschrittmotor beinhalten, mindestens eine erste Seilrolle in direktem Eingriff mit der Abtriebswelle des Getriebemotors, eine zweite Seilrolle, ein Seil zwischen der ersten und der zweiten Seilrolle, mindestens einen ersten Hebel, der die zweite Seilrolle trägt, und einen zweiten Hebel, der am ersten Hebel angelenkt ist, und wobei eine Druckstange zwischen dem zweiten Hebel und der zweiten Druckfläche vorgesehen ist, wobei optional der mindestens eine Kraftsensor zwischen dem zweiten Hebel und der Druckstange arrangiert ist.

12. Bank zur Charakterisierung nach Anspruch 11, wobei die Kraftübertragung zwischen den Mitteln zur Anwendung einer Kraft und der zweiten Druckfläche über zwei Verbindungen vom Punktkontakttyp erfolgt, wobei optional die Druckstange in Punktkontakt mit dem zweiten Hebel und dem mindestens einen Kraftsensor steht.

13. Verfahren zur Charakterisierung eines dünnen Objekts unter Verwendung einer Bank zur Charakterisierung nach einem der vorhergehenden Ansprüche, beinhaltend:
- Positionieren des Objekts auf der ersten Druckfläche, um den Bereich von Interesse mit der Druckzone auszurichten,
- Anwendung der zweiten Druckfläche auf das Objekt,
- die Messung der Verschiebung zwischen den zwei Druckflächen in Abhängigkeit von einem angewendeten Druckaufwand.

14. Verfahren zur Charakterisierung nach Anspruch 13, wobei ein Stimulus angewendet wird, um eine Veränderung des Volumens des Objekts während der Messung zu bewirken.

15. Verfahren zur Charakterisierung nach Anspruch 13 oder 14, wobei das dünne Objekt eine elektrochemische Batteriezelle ist, deren Bereich von Interesse der Bereich ist, der den Stapel beinhaltet, der durch die positive Elektrode, den Separator, die negative Elektrode und eine Verpackung um den Stapel gebildet wird, wobei das Verfahren, während den Messungen, einen Schritt zur Anwendung eines elektrischen Lade- und/oder Entladungszyklus beinhaltet.

## Claims

1. Bench for mechanically characterising a thin object by applying a compression force along a given compression axis, including:
- a frame,
- a bottom compression assembly resting on the frame and including a first compression face,
- movable equipment that is able to move along the compression axis with respect to the frame and carrying a top compression assembly including a second compression face opposite the first compression face,
- uprights secured to the frame,
- means for applying a force along the compression axis to the object intended to be located between the first and second compression faces, said force having a given intensity and being orthogonal to the first and second compression faces, the application means being secured to said uprights,
- at least one force sensor interposed between the movable equipment and the means for applying a force,
- at least one movement sensor disposed so as to measure the movement between the first compression face and the second compression face in the direction of the compression axis,
wherein the top compression assembly includes a second compression part carrying the second compression face and a second mounting surrounding the second compression part, the second compression part and the second mounting being rigidly connected to each other at least in the direction of the compression axis, and having a connection in the directions orthogonal to the movement direction, having low rigidity so that a deformation of the second compression part in the plane orthogonal to the compression direction does not deform or only slightly deforms the second mounting and wherein the at least one movement sensor measures the movement between the top compression assembly and the bottom compression assembly.

2. Characterisation bench according to claim 1, wherein the bottom compression assembly includes a first compression part carrying the first compression face and a first mounting surrounding the first compression part, the first compression part and the first mounting being rigidly connected to each other at least in the direction of the compression axis, and having a connection in the directions orthogonal to the movement direction that has low rigidity, so that a deformation of the first compression part in the plane orthogonal to the compression direction does not deform or only slightly deforms the first mounting.

3. Characterisation bench according to claim 2, wherein the first compression part is connected to the first mounting by at least two first arms extending from the first compression part, a free end of each first arm being secured to an edge of the first mounting, and wherein an aperture in the first mounting passing through the thickness of the first mounting orthogonally to the arm is located opposite each free end of an arm.

4. Characterisation bench according to claim 1 to 3, wherein the second compression part is connected to the second mounting by at least two second arms extending from the second compression part, a free end of each second arm being secured to an edge of the second mounting, and wherein an aperture in the second mounting passing through the thickness of the second mounting orthogonally to the arm is located opposite each free end of an arm.

5. Characterisation bench according to claim 1 to 4, wherein at least one of the first and second compression faces includes a projecting compression zone the surface area of which is less than or equal to a part of interest of the object to be **characterised, in** which optionally the compression zone has a surface area equal to the surface area of the part of interest of the object.

6. Characterisation bench according to claim 3 and 4, wherein the at least one movement sensor is carried by the first or second mounting and is in contact with the second or first mounting to measure the movement between the first mounting and the second mounting.

7. Characterisation bench according to claim 1, including three movement sensors distributed around the compression axis and means configured for comparing their measurements and detecting a flatness defect.

8. Characterisation bench according to any of claims 1 to 7, wherein the second compression part includes a foot downstream of the second compression face in the direction of application of the compression force, said foot including two secant bores located in a plane orthogonal to the direction of application of the force.

9. Characterisation bench according to any of claims 1 to 8, wherein the compression force is transmitted from the means for applying a force to the first and second compression faces by at least one connection of the point contact type, wherein optionnally the at least one force sensor is connected to the means for applying a force by a connection of the point contact type.

10. Characterisation bench according to any of claims 1 to 9, wherein the means for applying a force include means for modifying the intensity of the force applied.

11. Characterisation bench according to ant of claims 1 to 10, wherein the means for applying a force include a stepping geared motor, at least one first pulley in direct engagement with the output shaft of the geared motor, a second pulley, a cable between the first and second pulleys, at least one first lever carrying the second pulley and a second lever articulated on the first lever, and wherein a compression rod is provided between the second lever and the second compression face, wherein optionally the at least one force sensor is disposed between the second lever and the compression rod.

12. Characterisation bench according to claim 11, wherein the transmission of the force between the means for applying the force and the second compression face takes place through two connections of the point contact type, wherein optionnallly the compression rod is in point contact with the second lever and the at least one force sensor.

13. Method for characterising a thin object using a characterisation bench according to one of the preceding claims, including:
- placing the object on the first compression face so as to align the part of interest with the compression zone,
- applying the second compression face to the object,
- measuring the movement between the two compression faces according to an applied compression force.

14. Method according to claim 13, wherein a stimulus may be applied so as to cause a modification of the volume of the object during the measurement.

15. Method according to claim 13 or 14, wherein the thin object is an electrochemical battery cell the part of interest of which is the part including the stack formed by the positive electrode, the separator, the negative electrode and a package around the stack, the method including, during the measurements, a step of applying an electrical charging and/or discharging cycle.
